# EUROPÄISCHE PATENTANMELDUNG

(11) **EP 1 637 823 A1**
(43) Veröffentlichungstag der Anmeldung: **22.03.2006**
(21) Anmeldenummer: 05019619.5
(22) Anmeldetag: 09.09.2005
(51) Int. Cl.: F27B 3/20, F27D 23/00, F23D 14/24, F23D 14/70, C21C 5/52

(54) **Metallschmelzofen und Verfahren sowie Verwendung zum Schmelzen von Metallen**

(30) Priorität: 21.09.2004 DE 102004045701
(71) Anmelder: Linde Aktiengesellschaft, 65189 Wiesbaden (DE)
(72) Erfinder: Biedenkopf, Peter, Dr., 85614 Kirchseeon (DE); Kulkies, Andreas, 85774 Unterföhring (DE)

(57) **Zusammenfassung**

Die Erfindung betrifft einen Ofen (30), etwa zum Aufschmelzen von Aluminium (31), mit zumindest einem schräg oder vertikal nach unten gerichteten Brenner (1), dessen Flammenlänge bei konstanter thermischer Leistung einstellbar ist.
Die Erfindung bietet damit einen herrvoragenden Kompromiss zwischen einer Schonung des aufschmelzenden Materials und Kurzen Taktzeiten sowie guter Energieeffizienz.

## Beschreibung

### Technisches Gebiet

Die vorliegende Erfindung bezieht sich auf einen Metallschmelzofen, der über einen Brenner geheizt wird, sowie auf ein entsprechendes Verfahren zum Schmelzen von Metallen.

### Stand der Technik

Industrieöfen zum Metallschmelzen mit Brennern als Heizung sind in vielfältigen Ausführungsformen seit langem bekannt und im Einsatz. In der Regel werden die Brenner dabei so angebracht, dass die Flamme des Brenners im Ofenbetrieb in den Ofeninnenraum gerichtet ist und diesen dadurch direkt heizt. Öfen dieses Typs existieren in verschiedene Bauformen, beispielsweise Herdöfen, Drehtrommelöfen, Kippdrehtrommelöfen, Schachtöfen. Zu den Herdöfen sind auch jüngere Typen des Herdofens zu rechnen, beispielsweise sog. Closed-Weil-Öfen, Zweikammeröfen (twin chamber) oder Dreikammeröfen.

Die zugehörigen Brenner werden in der Regel mit fossilen Brennstoffen, häufig Erdgas, betrieben. Dabei kann dem Erdgasstrom neben Luft auch sauerstoffangereicherte Luft oder im Wesentlichen reiner Sauerstoff zugeführt werden.

Der Wärmeübergang zwischen der heißen Flamme des Brenners und dem zu heizenden Metall in dem Ofen kann konvektiv und/oder über Strahlungsheizung erfolgen. Bei der Strahlungsheizung wird die Strahlung der Flamme selbst oder eines von der Flamme geheizten Körpers ausgenutzt, bei der konvektiven Heizung wird die Flamme auf das zu heizende Metall gerichtet, so dass die Flamme selbst das Gut berührt oder zumindest die heißen Verbrennungsgase direkt auf das Gut strömen. Bei der konvektiven Heizung durch Brennerflammen besteht je nach zu heizendem Gut die Gefahr, ungewollte Überhitzungen und/oder Oxidationen auszulösen.

### Darstellung der Erfindung

Der Erfindung liegt das technische Problem zu Grunde, einen verbesserten Metallschmelzofen und ein entsprechendes verbessertes Heizverfahren anzugeben, mit denen sich Metall mit der Brennerflamme effizient schmelzen lässt.

Die Erfindung bezieht sich auf einen Metallschmelzofen mit zumindest einem Brenner, dessen Flamme im Betrieb in den Innenraum des Ofens gerichtet ist, dadurch gekennzeichnet, dass der Brenner eine Einrichtung zum Einstellen der Flammenlänge aufweist und der Brenner so ausgerichtet ist, dass seine Flamme mit einem Winkel von mindestens 25° gegenüber der Horizontalen auf das zu erhitzende Gut nach unten gerichtet ist, sowie auf ein Verfahren zum Schmelzen einer Metall-Chargierung eines Ofens mit Hilfe eines Brenners, dessen Flamme in den Innenraum des Ofens gerichtet wird, dadurch gekennzeichnet, dass die Flamme des Brenners während des Erhitzens mit einem Winkel von mindestens 25° gegenüber der Horizontalen auf das zu erhitzende Gut nach unten gerichtet wird und die Flammenlänge eingestellt wird, und schließlich auf die Verwendung des Metallschmelzofens.

Bevorzugte Ausgestaltungen der Erfindung sind in den abhängigen Ansprüchen angegeben. In der folgenden Beschreibung wird nicht mehr im Einzelnen zwischen dem Vorrichtungsaspekt, dem Verfahrensaspekt sowie dem Verwendungsaspekt der Erfindung unterschieden. Die Offenbarung ist implizit im Hinblick auf beide Kategorien zu verstehen.

Die Erfindung sieht vor, den Brenner des Ofens so auszurichten, dass die Flamme nach unten auf das zu heizende Metall gerichtet ist. Dabei kann es sich um eine schräge Ausrichtung oder auch um eine vertikale Ausrichtung handeln.

Die schräge Ausrichtung soll einen Winkel zwischen der Flammenhauptachse und der Horizontalen von mindestens 25°, vorzugsweise mindestens 30° und besonders bevorzugter Weise mindestens 35° bilden. Mit dieser Vorgehensweise wird der konvektive Wärmeübergang in das Gut erhöht. Gleichzeitig soll ein Brenner verwendet werden, dessen Flammenlänge einstellbar ist. Damit ergibt sich die Möglichkeit, den Abstand zwischen der Flamme und dem Metall oder allgemeiner gesprochen die geometrische Beziehung zwischen der Flamme und dem Metall in einem gewissen Umfang einzustellen.

Die Erfindung bevorzugt diese einstellbare Flammenlänge gegenüber anderen Möglichkeiten zur geometrischen Einstellung der Flamme, etwa der Verstellbarkeit der Brenneraufhängung, der Verschwenkbarkeit eines schräg stehenden Brenners oder dgl. Diese Möglichkeiten sind zwar nicht ausgeschlossen, jedoch soll zumindest die verstellbare Flammenlänge als Möglichkeit zur Beeinflussung der relativen geometrischen Beziehung zwischen der Flamme und dem Metall gegeben sein.

Die Flammenlänge lässt sich in verschiedener Weise einstellen, und der Grundgedanke der Erfindung hängt von den Einzelheiten dieser Einstellbarkeit nicht ab. Im Prinzip besteht die Möglichkeit, die Strömungsgeschwindigkeit der aus dem Brenner austretenden Gase und damit die Flammenlänge zu beeinflussen. Dies kann durch geometrische Veränderungen an der Brenneröffnung, etwa Veränderungen des Öffnungsquerschnitts, aber auch durch Erhöhung des Durchsatzes geschehen. In vielen Fällen wird mit einer solchen Einstellung eine wesentliche Veränderung der Leistung des Brenners verbunden sein, was bei bestimmten Anwendungsfällen auch durchaus tolerabel sein kann.

Bevorzugt sind allerdings, wie weiter unten noch im Einzelnen erläutert, Techniken der Flammenlängeneinstellung, bei denen die Leistung nicht oder nicht zu stark beeinflusst wird. Ein Beispiel aus dem Stand der Technik findet sich in der EP 1 081 432 A1, wo ganz allgemein ein Gasstrom zwischen einer Flammenumhüllung gehalten ist und durch die gasdynamische Steuerung der Flammenumhüllung die Länge des Gasstroms im Zentrum einstellbar ist. Dieser Gasstrom könnte auch eine Flamme sein. Da die Veränderungen der umhüllenden Flamme relativ starke Auswirkungen auf die Gesamtstrahllänge, dann also Gesamtflammenlänge, haben und andererseits der Mengendurchsatz der umhüllenden Flamme erheblich kleiner gehalten werden kann als der Mengendurchsatz des Zentralstrahls, kommen damit auch Flammenlängenänderungen mit nur geringer Leistungsveränderung in Betracht.

Auf andere bevorzugte Möglichkeiten der Flammenlängeneinstellung wird im Folgenden noch näher eingegangen.

Bei dem erfindungsgemäßen Ofen handelt es sich vorzugsweise um einen Herdofen, wobei der Begriff des Herdofens die zuvor genannten und auch andere jüngere Typen, die grundsätzlich zu den Herdöfen zu zählen sind, beinhalten soll. Ein Herdofen zeichnet sich durch eine seitliche Tür und einen diskontinuierlichen Betrieb aus.

Herdöfen werden im Vergleich beispielsweise zu Schachtöfen eher horizontal chargiert, d. h. das Material liegt stärker in der Fläche verteilt und weniger übereinander geschichtet. Insbesondere ist die Chargierrichtung eine im Wesentlichen horizontale.

Bei Schmelzöfen zum Aufschmelzen von Metallen ist die Beeinträchtigung durch die Flamme von besonderer Bedeutung. Bei Metallen können Oxidationsreaktionen auftreten, die durch die Einstellbarkeit des erfindungsgemäßen Ofens kontrolliert werden können. Daneben kann es von Vorteil sein, beispielsweise durch ein anfängliches Kurzhalten der Flamme einen eher gleichmäßigen Wärmeeintrag in einen Haufen aus Metallmaterial mit deutlich unebener ("gehäufter") Oberfläche zu erzielen und im Verlauf der Einebnung der Oberfläche durch zunehmendes Aufschmelzen dann die Flamme zu verlängern. Vor allem ist aber die Frage des Kontakts zwischen den Gasen in der Flamme und dem Metall von Belang.

Besonders interessant ist die Erfindung für Nichteisenmetalle, insbesondere Aluminium, Kupfer, Blei, Zink. Der bevorzugte Anwendungsbereich liegt im Aufschmelzen von Aluminium. Hier sind die Elementangaben übrigens im technischen und nicht unbedingt chemisch reinen Sinn gemeint, d. h. bei Elementanteilen über etwa 60 Gew.%. Der Begriff Aluminium beinhaltet ferner auch oxidisch verunreinigtes Recyclingmaterial wie etwa "Krätze" ("dross") mit über etwa 10 Gew. % Al.

Die Erfindung erlaubt damit einerseits eine Effizienzverbesserung durch Vermeidung von Materialschädigungen, andererseits eine Steigerung des Durchsatzes durch eine Reduzierung der zum Aufschmelzen benötigten Zeit. Damit eignet sich die Erfindung besonders auch für kombinierte Schmelz- und Halteofenanlagen. Dort wird in einem Schmelzofen eine (beispielsweise Aluminium-) Schmelze erzeugt, die über eine Leitung zu einem benachbarten Halteofen geführt wird. In diesem wird die Schmelze auf einer bestimmten Temperatur gehalten, um hier nicht weiter interessierende Prozesse durchzuführen. Die Erfindung verkürzt die Taktzeiten des Schmelzofens. Insbesondere erlaubt die Verwendung einer relativ langen Flamme auf dem bereits weitgehend oder vollständig geschmolzenen Material eine relativ rasche Erhöhung noch über die Schmelztemperatur hinaus, was zur Sicherstellung einer ausreichend niedrigen Viskosität für den Transport in den Halteofen oder auch zur Vorbereitung der im Halteofen notwendigen Prozesstemperatur wichtig sein kann. Beispielsweise kann es bei Aluminium wesentlich sein, über den je nach Legierung zwischen größenordungsmäßig 600 und 650 °C liegenden Schmelzpunkt hinaus auf Temperaturen in der Größenordnung von 700 °C zu erwärmen, damit das Aluminium ausreichend dünnflüssig wird, um gut in den Halteofen gebracht werden zu können.

Wie bereits geschildert, erfolgt die Einstellung der Flammenlänge des Brenners vorzugsweise weitgehend unabhängig von der Brennerleistung. Neben den erwähnten Möglichkeiten kann hier auch ein außenmischender Brenner mit einem Brennerkopf, mindestens einem Brenngasrohr und mindestens einem Rohr für ein sauerstoffhaltiges Gas vorgesehen sein, wobei der Brennerkopf Austrittsöffnungen aus dem Brenngasrohr und aus dem Rohr für das sauerstoffhaltige Gas aufweist.

Dabei sind Gaszuleitungen für Brenngas und für sauerstoffhaltiges Gas vorgesehen, die je mit einer Quelle für Brenngas bzw. für sauerstoffhaltiges Gas in Verbindung stehen und von denen mindestens eine Gaszuleitung exzentrisch in eine Drallkammer mündet, die zwischen der Gaszuleitung und dem Brenngasrohr und/oder zwischen der Gaszuleitung und dem Rohr für sauerstoffhaltiges Gas angebracht ist.

Bevorzugt teilt sich mindestens eine der Gaszuleitungen stromaufwärts vor der Drallkammer in zwei Leitungen auf, wobei eine dieser Leitungen exzentrisch in die Drallkammer mündet und die andere dieser Leitungen direkt in das Brenngasrohr bzw. in das Rohr für sauerstoffhaltiges Gas mündet.

Besonders bevorzugt sind in den Gaszuleitungen Ventile vorgesehen, insbesondere in dem Teil der Gaszuleitungen, in dem mindestens eine Gaszuleitung bereits in zwei Leitungen geteilt ist, und steht eine Steuer- oder Regeleinrichtung zur Verfügung, die die Öffnungsgrade der Ventile steuert oder regelt, wodurch die Länge der Flamme des Brenners einstellbar ist.

Zweckmäßigerweise sind die Ventile als Magnetventile ausgebildet. Diese lassen eine stufenweise veränderbare Einstellung der Flammenform zu. Bei höheren Ansprüchen können die Magnetventile teilweise oder ganz gegen Regelventile ausgetauscht werden. Diese lassen eine kontinuierlich veränderbare Einstellung der Flammenform zu.

Bevorzugt weist die Drallkammer in einem Schnitt senkrecht zur Längsachse des Brenngasrohres einen kreisförmigen Querschnitt auf. Besonders bevorzugt mündet die Gaszuleitung tangential in die Drallkammer. Durch jede dieser Ausgestaltungen kann die Reibung für den Drallstrom verringert und zusammen minimiert werden.
Verfahrensseitig wird die gestellte Aufgabe dadurch gelöst, dass das Brenngas und/oder das sauerstoffhaltige Gas exzentrisch in eine Drallkammer eingetragen werden, in der dem Brenngas bzw. dem sauerstoffhaltigen Gas eine Drallströmung aufgeprägt wird und das Brenngas bzw. sauerstoffhaltige Gas nach Verlassen der Drallkammer dem Brenngasrohr bzw. dem Rohr für sauerstoffhaltiges Gas zugeführt wird.

Bevorzugt werden die pro Zeiteinheit über die Drallkammer und ohne die Drallkammer dem Brenner zugeführten Mengen an Brenngas und sauerstoffhaltigem Gas gesteuert oder geregelt, wobei das Brenngas und das sauerstoffhaltige Gas über Ventile geleitet werden, deren Öffnungsgrade so gesteuert oder geregelt werden, dass der Brenner eine Flamme erzeugt, die eine gewünschte und über die Steuerung oder Regelung einstellbare Länge aufweist.

Insbesondere bei der Befeuerung von Industrieöfen zum Einschmelzen von Metallen oder Glas werden häufig Brennstoff-Sauerstoff-Brenner eingesetzt. Bei der Verbrennung von Brennstoff mit Luft wirkt der in der Luft als Hauptbestandteil enthaltene Stickstoff im wesentlichen als Ballastgas. Zur Verringerung des Abgasvolumens ist man dazu übergegangen, die Brenner mit einem sauerstoffhaltigen Gas als Oxidationsmittel zu betreiben, dessen Sauerstoffgehalt gegenüber dem Sauerstoffgehalt von Luft erhöht ist. Diese Vorgehensweise hat den Vorteil, dass sich aufgrund des niedrigeren Stickstoffgehalts die Flammentemperatur erhöht und der Wärmegehalt im Abgas reduziert, wodurch ein höherer thermischer Wirkungsgrad erreicht werden kann und die Bildung von Stickoxiden vorteilhaft vermindert wird.

Für die Erfindung ist sowohl Luft als Oxidationsmittel geeignet wie auch sauerstoffhaltiges Gas mit einem gegenüber dem Sauerstoffgehalt von Luft erhöhten Sauerstoffgehalt. Der Vorteil beim Einsatz von Luft besteht in der ständigen und kostenlosen Verfügbarkeit. Die Vorteile des höheren Sauerstoffgehalts wurden bereits erläutert.

Gemäß einer weiteren Ausgestaltung der Erfindung wird als sauerstoffhaltiges Gas sauerstoffangereicherte Luft eingesetzt. Diese bietet den Vorteil, dass sie immer noch preiswert ist und aber auch bereits ansatzweise die Vorteile des Einsatzes von Sauerstoff für die Verbrennung zeigt, die in dem gegenüber Luft vermindertem Stickstoffgehalt und der höheren erzielbaren Verbrennungstemperatur liegen.

Gemäß einer bevorzugten Ausgestaltung der Erfindung wird als sauerstoffhaltiges Gas ein Gas mit einem Sauerstoffgehalt größer als der Sauerstoffgehalt von Luft, insbesondere mit einem Sauerstoffgehalt größer als 30 Vol.%, eingesetzt. Die eben beschriebenen Vorteile von Sauerstoff im Oxidationsmittel für eine Verbrennung sind bei dieser Ausgestaltung stärker ausgeprägt.

Gemäß einer besonders bevorzugten Ausgestaltung der Erfindung wird als sauerstoffhaltiges Gas ein Gas mit einem Sauerstoffgehalt größer als 70 Vol.%, insbesondere größer als 99,5 Vol% eingesetzt. Bei dieser Ausgestaltung sind die Vorteile von Sauerstoff maximal ausgeprägt, allerdings steigen die Kosten für das Oxidationsmittel damit an, so dass für jede Anwendung eine Abwägung stattfinden sollte, welcher Sauerstoffgehalt technisch wünschenswert oder erforderlich und wirtschaftlich vertretbar ist.

Bevorzugt wird dem Brenngasstrom eine Drallströmung aufgeprägt. Dabei besteht der Vorteil darin, dass eine gute Vermischung des Brennstoffs mit dem Sauerstoff bei leicht verkürzter Flamme entsteht.

Gemäß einer anderen vorteilhaften Ausführungsform der Erfindung wird dem Strom des sauerstoffhaltigen Gases eine Drallströmung aufgeprägt. Dies ist vorteilhaft, da die Flamme sich auch hier etwas verkürzt und der Brenner sich konstruktiv etwas einfacher fertigen läßt.

Gemäß einer besonders bevorzugten Ausführungsform der Erfindung werden dem Brenngasstrom und dem Strom des sauerstoffhaltigen Gases zueinander gleichsinnige Drallströmungen aufgeprägt. Dabei besteht der Vorteil darin, dass die Flamme sehr kurz und leise ist.

Eine weitere Ausgestaltung der Erfindung sieht vor, dass dem Brenngasstrom und dem Strom des sauerstoffhaltigen Gases zueinander gegenläufige Drallströmungen aufgeprägt werden. Dies ist für den Fall zu empfehlen, dass eine extrem kurze, buschige Flamme benötigt wird.

Ein wesentlicher Vorteil dieser Ausgestaltung der Erfindung besteht darin, dass die Veränderung der Flammenlänge stufenlos (ohne die Brennstoffmenge während des Betriebes zu verändern) geändert werden kann. Es müssen auch keine Veränderungen am Brenner (wie z. B. Düsenwechsel) vorgenommen werden. So kann die momentane Flammenlänge auf bis zu ein Drittel ihrer maximalen Länge verringert werden.

Der entsprechend ausgestaltete Ofen ist besonders für Prozesse geeignet, bei denen festes Material zu flüssigem Material geschmolzen wird, da sich hier die schmelzenden Materialien in ihrer Form verändern und die Flammenform dieser Änderung angepaßt werden kann.

Ein weiterer großer Vorteil ist, dass die Veränderung der Flammenlänge stufenlos erfolgt und während des Betriebs des Brenners die Aufprägung einer Drallströmung begonnen und auch wieder beendet werden kann, ohne dass der Brenner abgestellt werden müßte und ohne dass irgendwelche baulichen Veränderungen, wie beispielsweise das Wechseln einer herkömmlichen Drallscheibe notwendig wäre. Die Veränderung der Flamme erfolgt über die Änderung mindestens einer der beiden Gasströmungen allein über die Einstellung des Öffnungsgrades der beschriebenen Ventile, was wiederum über die Steuer- oder Regeleinrichtung geschieht.

### Kurze Beschreibung der Zeichnungen

Die Erfindung wird im Folgenden anhand zweier Ausführungsbeispiele näher erläutert, wobei die einzelnen Merkmale auch in anderen Kombinationen erfindungswesentlich sein können und sich sowohl auf den Vorrichtungs- als auch auf den Verfahrenscharakter der Erfindung beziehen.
- Figur 1: zeigt einen Brenner zum Einsatz in einem erfindungsgemäßen Ofen.
- Figur 2: zeigt einen Schnitt entlang der Linie A-A in Figur 1.
- Figur 3: zeigt einen Schnitt entlang der Linie B-B in Figur 1.
- Figur 4: zeigt eine schematische Darstellung zur Erläuterung der Flammenlängeneinstellung mit dem Brenner aus den Figuren 1 bis 3.
- Figur 5: zeigt eine schematische Darstellung eines erfindungsgemäßen Ofens mit einem Brenner gemäß den Figuren 1 bis 3 als erstes Ausführungsbeispiel.
- Figur 6: zeigt den Ofen aus Figur 5 in einem anderen Betriebszustand.
- Figur 7: zeigt einen erfindungsgemäßen Ofen mit zwei Brennern gemäß den Figuren 1 bis 3 als zweites Ausführungsbeispiel.

### Bevorzugte Ausführung der Erfindung

Bevor auf den eigentlichen erfindungsgemäßen Ofen näher eingegangen wird, wird zunächst eine bevorzugte Ausgestaltung eines Brenners für diesen Ofen erläutert, die eine besonders günstige Einstellbarkeit der Flammenlänge gestattet.

Im Einzelnen zeigen die Figuren einen Brenner 1 mit einem Brennerkopf 2, einem Rohr 4 für ein sauerstoffhaltiges Gas und mit einem Brenngasrohr 3 (nicht dargestellt). Die beiden Rohre sind konzentrisch angeordnet, und zwar so, dass das Brenngasrohr 3 innerhalb des Rohres 4 angebracht ist. Ein so aufgebauter Brenner 1 wird auch Parallelstrombrenner genannt. Als Brenngas wird beispielsweise Erdgas eingesetzt.

Ein beispielhafter Betrieb des Brenners 1, bei dem beide Gasströme gleichsinnig gedrallt werden, sieht folgendermaßen aus: Erdgas strömt von der Gaszuleitung 6 bei geöffnetem Ventil 10 über die Leitung 6a in die Drallkammer 8. Dort wird dem Ergasstrom eine Drallströmung aufgeprägt. Das Ventil 11 ist dabei geschlossen.

Sauerstoffangereicherte Luft gelangt über die Gaszuleitung 7 und die Leitung 7a in die Drallkammer 9. Dort wird diesem Gasstrom eine dem Erdgasstrom gleichsinnige Drallströmung aufgeprägt. Dabei ist das Ventil 12 geöffnet und das Ventil 13 geschlossen.

Der Strom der sauerstoffangereicherten Luft verlässt die Drallkammer und wird in das Rohr 4 eingetragen. Der Erdgasstrom wird in das Brenngasrohr 3 eingetragen.

Am Brennerkopf 2 mischen sich die beiden Gasströme und es entsteht eine charakteristische Flamme. Die Form und die Länge der entstehenden Flamme hängen direkt von der Einstellung der Ventile 10, 11, 12 und 13 ab.

Beispielsweise verlängert sich die Flamme, wenn der Brenngasstrom bei geöffnetem Ventil 11 und geschlossenem Ventil 10 zugegeben wird, d. h. dem Erdgasstrom keine Drallströmung aufgeprägt wird. Sie verlängert sich im Vergleich zu der soeben beschriebenen Flamme, bei der beiden Gasströmen eine Drallströmung aufgeprägt wird.

Ebenso kann lediglich der Erdgasstrom gedrallt werden und der Strom des sauerstoffhaltigen Gases ohne Drall über die Leitung 7b und das geöffnete Ventil 13 dem Rohr 4 zugeführt werden.

Durch Ausbildung der Ventile 10, 11, 12 und/oder 13 als Regelventile werden Zwischenstellungen, also einstellbare Öffnungsgrade dieser Ventile ermöglicht. Dadurch wird die Form der Flamme stufenlos verstellbar. Die Änderung der Form der Flamme erfolgt problemlos während des Betriebs des Brenners 1 mittels der Steuer- oder Regeleinrichtung für die Ventile 10, 11, 12, 13.

Randbedingungen für die Form der Flamme sind die Zufuhrmengen an Brenngas und sauerstoffhaltigen Gas. Die einmal gewählten Zufuhrmengen bleiben hier während des Betriebs des Brenners konstant. Lediglich durch die Wahl der Ventilstellungen für die Ventile 10, 11, 12, 13 wird eine kurze, buschige und breite Flamme bis hin zu einer langen, schmalen Flamme erzeugt.

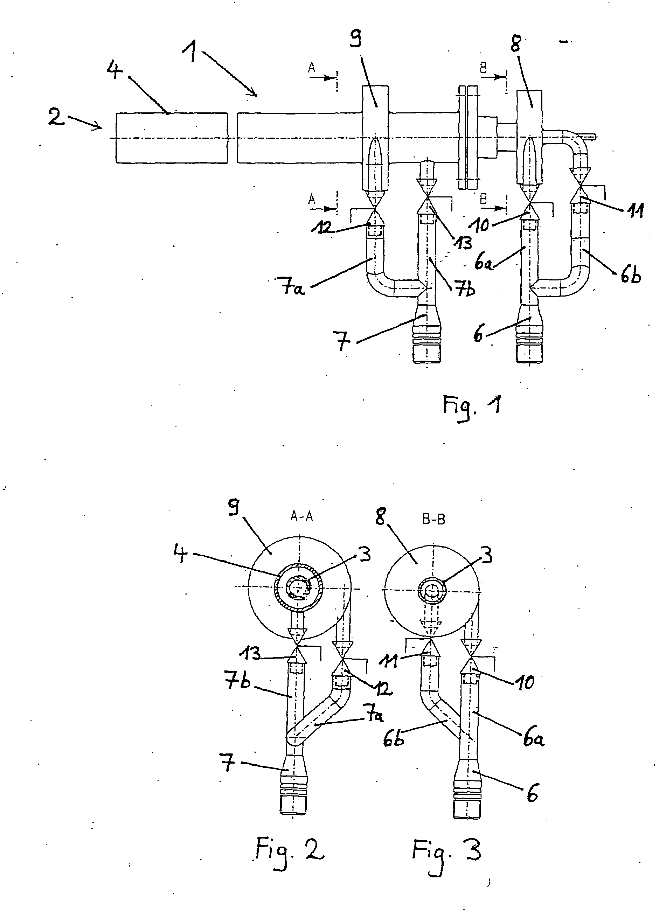

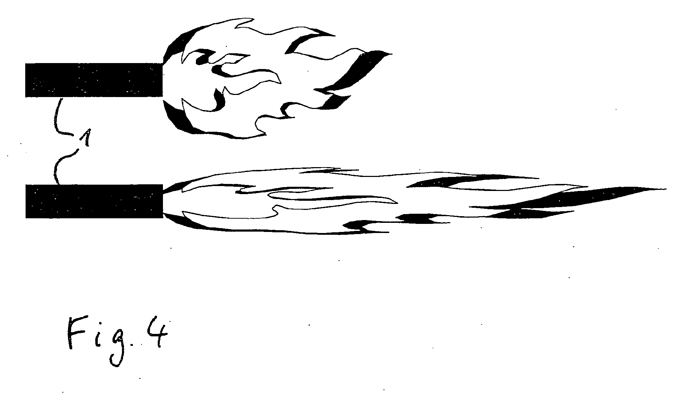

Figur 4 zeigt in einer schematischen Darstellung die bereits erwähnte kurze buschige Flamme oben und die lange schmale Flamme unten. Der Brenner 1 ist hier also zweimal dargestellt.

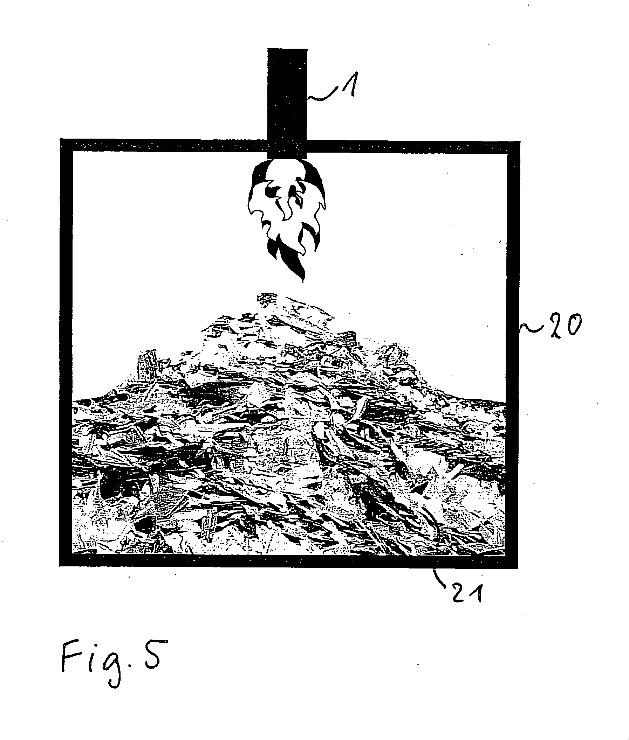

Figur 5 zeigt einen erfindungsgemäßen Ofen 20, nämlich einen Herdofen zum Aufschmelzen von Aluminium mit Quaderform, der im Schnitt als Quadrat dargestellt ist. Die Einzelheiten der Konstruktion des Ofens 20 sind mit Ausnahme der im Folgenden erläuterten Merkmale konventionell und dem Fachmann gut bekannt. Sie müssen daher nicht weiter erläutert werden und sind der Übersichtlichkeit halber in den Figuren weggelassen.

Bei diesem ersten Ausführungsbeispiel weist der Ofen 20 einen mittig an seiner Oberseite montierten Brenners 1 gemäß den Figuren 1 bis 3 mit vertikal nach unten gerichteter Orientierung auf.

Der Ofen 20 enthält einen Haufen 21 aus festen Aluminiumstücken, der einen etwa mittigen Gipfel hat. In dem Beispiel in Figur 5 liegt der Gipfel in der Mitte etwas über der halben Höhe des Ofens 20 und damit mehr als 50 % höher als die Randbereiche des Haufens 21.

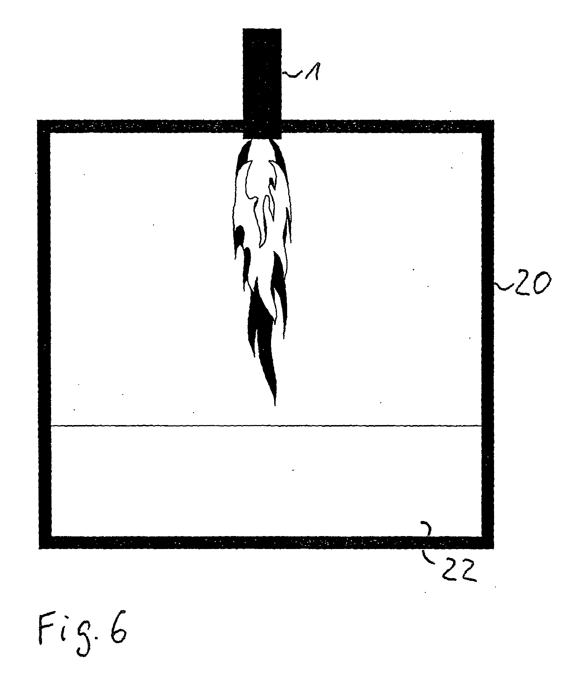

Im Vergleich dazu zeigt Figur 6 denselben Ofen 20, jedoch mit einem im unteren Bereich stehenden Bad aus Aluminiumschmelze 22.

Man erkennt im Vergleich der Figuren, dass in Figur 5 eine eher kurze buschige Flamme des Brenners 1 eingestellt ist, wohingegen in Figur 6 eine eher lange schmale Flamme eingestellt ist, wie dies bereits erläutert wurde. In beiden Fällen weist der untere Rand der Flamme noch einen gewissen Sicherheitsabstand von dem Aluminiumhaufen 21 bzw. dem Aluminiumschmelzenbad 22 auf.

Die Erfindung sieht vor, dass während des Aufschmelzens des Aluminiumhaufens 21 die Flammenlänge verändert wird, und zwar bei diesem Ausführungsbeispiel kontinuierlich bis zu dem in Figur 6 dargestellten Zustand verlängert wird, wobei die Verlängerung der sich durch das zunehmende Aufschmelzen absenkenden Höhe des Gipfels des Aluminiumhaufens 21 nachgefahren wird. Dieses Nachfahren kann aufgrund eines bei einer bestimmten Brennerleistung vorab bekannten Verhaltens voreingestellt sein, aber auch durch eine messtechnische Erfassung, etwa des obersten Punktes, des Haufens 21 geregelt erfolgen. Im Übrigen ist es natürlich auch möglich, solange die kurze Flamme aus Figur 5 zu verwenden, bis das Aluminium praktisch vollständig geschmolzen ist, und dann lediglich zur Überhitzung über den Schmelzpunkt hinaus auf die lange Flamme aus Figur 6 umzuschalten.

Die Steuerung der Flamme kann durch eine Messung der Temperatur des flüssigen Metalls am unteren Bereich des Ofens erfolgen, d. h. dass beispielsweise im Falle des Aluminiums bei 600 °C Badtemperatur mit einer kontinuierlichen Verlängerung der Flamme begonnen wird.

Die kurze buschige Flamme aus Figur 5 vermeidet eine Oxidation des in dieser Hinsicht empfindlichen Aluminiums und verhindert auch eine übermäßige Erhitzung des mittleren Bereichs des Haufens 21. Letztere würde auftreten, wenn die in Figur 6 dargestellte Flamme oder eine deutlich längere Flamme als die Flamme aus Figur 5 auf den Gipfel des Aluminiumhaufens 21 aus Figur 5 treffen würde. Die längere Flamme aus Figur 6 wiederum verbessert den konvektiven Wärmeeintrag in das Aluminiumschmelzenbad 22 und verbessert damit die Energieeffizienz bei gleich bleibender Brennerleistung und die Taktzeit.

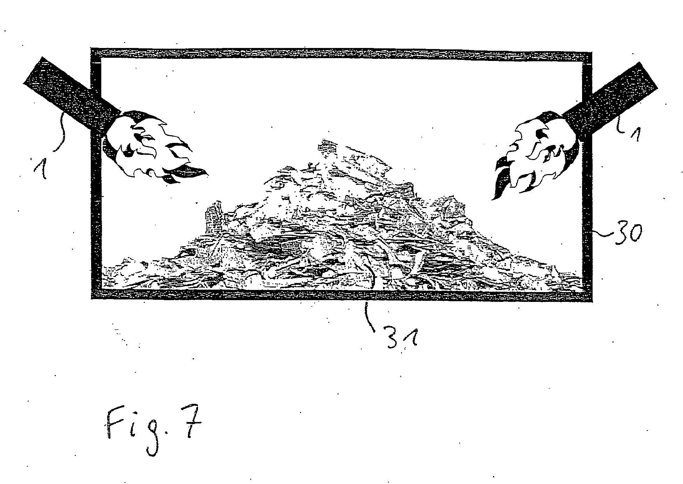

Figur 7 zeigt als zweites Ausführungsbeispiel einen Herdofen 30 mit Quaderform, der im Schnitt als breites Rechteck dargestellt ist. Er enthält einen in Folge der Ofenform etwas breiteren und niedrigeren Aluminiumhaufen 31. Der Ofen 30 weist bei diesem Ausführungsbeispiel wegen der größeren Breite zwei der anhand der Figuren 1 bis 3 beschriebenen Brenner 1 auf, die hier nicht in der Oberseite, sondern im oberen Bereich der Seitenwände montiert sind und mit einem Winkel von 35° gegenüber der Horizontalen nach unten gerichtet sind.

Im Prinzip gelten die Ausführungen zu den Figuren 5 und 6. Man kann sich leicht vorstellen, dass nach einem Aufschmelzen des Haufens 31 zu einem nur im unteren Bereich des Ofens 30 stehenden Aluminiumschmelzenbad längere Flammen der Brenner 1 eingestellt werden können.

Die Erfindung bietet damit einen hervorragenden Kompromiss zwischen einer Schonung des aufzuschmelzenden Materials und kurzen Taktzeiten sowie guter Energieeffizienz.

## Patentansprüche

1. Metallschmelzofen (20, 30)
mit zumindest einem Brenner (1), dessen Flamme im Betrieb in den Innenraum des Ofens (20, 30) gerichtet ist,
**dadurch gekennzeichnet, dass** der Brenner (1) eine Einrichtung (6 ― 13) zum Einstellen der Flammenlänge aufweist
und der Brenner (1) so ausgerichtet ist, dass seine Flamme mit einem Winkel von mindestens 25° gegenüber der Horizontalen auf das zu erhitzende Metall (21, 22, 31) nach unten gerichtet ist.

2. Metallschmelzofen nach Anspruch 1, der als Herdofen (20, 30) ausgestaltet ist.

3. Metallschmelzofen nach Anspruch 1 oder 2, der zum Aufschmelzen von Nichteisen-Metallen, insbesondere Al, Cu, Pb oder Zn, vorzugsweise Al (21, 22, 31), ausgestaltet ist.

4. Metallschmelzofen nach einem der vorstehenden Ansprüche, der ein Schmelzofen in einer kombinierten Schmelz- und Halteofenanlage mit einer Leitung zum Abführen aufgeschmolzenen Metalls aus dem Schmelzofen in den Halteofen ist.

5. Metallschmelzofen nach einem der vorstehenden Ansprüche, bei dem die Einrichtung (6 - 13) zur Einstellung der Flammenlänge eine von der Leistung des Brenners (1) im Wesentlichen unabhängige Einstellung der Flammenlänge erlaubt.

6. Metallschmelzofen nach Anspruch 5, bei dem der Brenner ein außenmischender Brenner (1) mit einem Brennerkopf (2), mindestens einem Brenngasrohr (3) und mindestens einem Rohr (4) für ein sauerstoffhaltiges Gas ist, wobei der Brennerkopf (2) Austrittsöffnungen aus dem Brenngasrohr (3) und aus dem Rohr (4) für das sauerstoffhaltige Gas aufweist und Gaszuleitungen (6, 7) für Brenngas und für sauerstoffhaltiges Gas vorgesehen sind, die je mit einer Quelle für Brenngas bzw. für sauerstoffhaltiges Gas in Verbindung stehen und von denen mindestens eine Gaszuleitung (6, 7) exzentrisch in eine Drallkammer (8, 9) mündet, die zwischen der Gaszuleitung (6) und dem Brenngasrohr (3) und/oder zwischen der Gaszuleitung (7) und dem Rohr (4) für sauerstoffhaltiges Gas angebracht ist.

7. Metallschmelzofen nach Anspruch 6, bei dem mindestens eine der Gaszuleitungen (6, 7) sich stromaufwärts vor der Drallkammer (8, 9) in zwei Leitungen (6a, 6b, 7a, 7b) aufteilt, wobei eine dieser Leitungen (6a, 7a) exzentrisch in die Drallkammer (8, 9) mündet und die andere dieser Leitungen (6b, 7b) direkt in das Brenngasrohr (3) bzw. in das Rohr (4) für sauerstoffhaltiges Gas mündet.

8. Metallschmelzofen nach Anspruch 6 oder 7, bei dem in den Gaszuleitungen (6, 7) Ventile (10, 11, 12, 13) vorgesehen sind, insbesondere dass in dem Teil der Gaszuleitungen (6, 7) Ventile (10, 11, 12, 13) vorgesehen sind, indem mindestens eine Gaszuleitung (6, 7) bereits in zwei Leitungen (6a, 6b, 7a, 7b) geteilt ist, und eine Steuer- oder Regeleinrichtung zur Verfügung steht, die die Öffnungsgrade der Ventile (10, 11, 12, 13) steuert oder regelt, wodurch die Form der Flamme des Brenners (1) einstellbar ist.

9. Metallschmelzofen nach einem der Ansprüche 6 bis 8, bei dem die Drallkammer (8, 9) in einem Schnitt senkrecht zur Längsachse des Brenngasrohres (3) einen kreisförmigen Querschnitt aufweist.

10. Verfahren zum Schmelzen einer Metall-Chargierung eines Ofens (20, 30) mit Hilfe eines Brenners (1), dessen Flamme in den Innenraum des Ofens (20, 30) gerichtet wird,
**dadurch gekennzeichnet, dass** die Flamme des Brenners (1) während des Erhitzens mit einem Winkel von mindestens 25° gegenüber der Horizontalen auf das zu erhitzende Metall (21, 22, 31) nach unten gerichtet wird und die Flammenlänge eingestellt wird.

11. Verfahren nach Anspruch 10, bei dem zunächst eine Flammenlänge eingestellt wird, die so kurz ist, dass die Oberfläche des noch nicht aufgeschmolzenen Metalls (21, 31) nicht übermäßig oxidiert wird, und im weiteren Verlauf die Flammenlänge erhöht wird, um einen guten konvektiven Wärmeübergang zu der in Folge des Aufschmelzens absinkenden Oberfläche des Metalls (22) sicherzustellen.

12. Verfahren nach Anspruch 10 oder 11, bei dem die Leistung des Brenners (1) während des Verstellens der Flammenlänge im Wesentlichen konstant bleibt.

13. Verfahren nach einem der Ansprüche 10 bis 12 unter Verwendung eines Ofens (20, 30) nach einem der Ansprüche 1 bis 9.

14. Verfahren nach einem der Ansprüche 10 bis 13, bei dem der Brenner ein außenmischender Brenner (1) ist, der mindestens ein Brenngasrohr (3) und mindestens ein Rohr (4) für sauerstoffhaltiges Gas aufweist, durch die Brenngas bzw. sauerstoffhaltiges Gas zum Brennerkopf (2) strömen, wobei das Brenngas und/oder das sauerstoffhaltige Gas exzentrisch in eine Drallkammer (8, 9) eingetragen wird, in der dem Brenngas bzw. dem sauerstoffhaltigen Gas eine Drallströmung aufgeprägt wird, das Brenngas bzw. sauerstoffhaltige Gas nach Verlassen der Drallkammer (8, 9) dem Brenngasrohr (3) bzw. dem Rohr (4) für sauerstoffhaltiges Gas zugeführt wird, die pro Zeiteinheit über die Drallkammer (8, 9) und ohne die Drallkammer (8, 9) dem Brenner (1) zugeführten Mengen an Brenngas und sauerstoffhaltigem Gas gesteuert und/oder geregelt werden, wobei das Brenngas und das sauerstoffhaltige Gas über Ventile (10, 11, 12, 13) geleitet werden, deren Öffnungsgrade so gesteuert oder geregelt werden, dass der Brenner (1) eine Flamme erzeugt, die eine gewünschte und über die Steuerung und/oder Regelung einstellbare Länge aufweist.

15. Verfahren nach einem der Ansprüche 10 - 14, bei dem als sauerstoffhaltiges Gas ein Gas mit einem Sauerstoffgehalt größer als der Sauerstoffgehalt von Luft, insbesondere mit einem Sauerstoffgehalt größer als 30, besser 70, vorzugsweise 99,5 Vol.% eingesetzt wird.

16. Verwendung eines Ofens nach einem der Ansprüche 1 ― 9 zum Aufschmelzen von Metallen.
